# EUROPEAN PATENT APPLICATION

(11) **EP 4 635 604 A1**
(43) Date of publication of application: **22.10.2025**
(21) Application number: 23922825.7
(22) Date of filing: 28.08.2023
(51) Int. Cl.: B01D 53/62, F04D 27/00

(54) **CONTROL DEVICE, EXHAUST GAS SUPPLY SYSTEM, CONTROL METHOD, AND PROGRAM**

(30) Priority: 16.02.2023 JP 2023022374
(71) Applicant: Mitsubishi Heavy Industries, Ltd., Tokyo 100-8332 (JP)
(72) Inventor: NAKAGAWA Yosuke, Tokyo 100-8332 (JP); SONODA Takashi, Tokyo 100-8332 (JP); TAKAKI Kazushige, Tokyo 100-8332 (JP); KISHI Makoto, Tokyo 100-8332 (JP)
(74) Representative: Studio Torta S.p.A.
(86) International application number: PCT/JP2023/030932
(87) International publication number: WO 2024/171491

(57) **Abstract**

Provided is a control device that operates a blower on the basis of operable conditions. The control device is for a system that supplies exhaust gas discharged from a facility to a CO₂ collection device by means of a blower. The control device comprises: a detection unit that detects the operation state of the facility; a determination unit that determines whether the flow rate of the exhaust gas is within the operation range of the blower on the basis of the detected operation state; and a control unit that operates the blower if the flow rate of the exhaust gas is within the operation range, and stops the blower if the flow rate of the exhaust gas is outside the operation range.

## Description

### Technical Field

The present disclosure relates to a control device, an exhaust gas supply system, a control method, and a program for a system in which an exhaust gas is supplied to a CO₂ capture unit. The present disclosure claims priority based on Japanese Patent Application No. 2023-022374 filed in Japan on February 16, 2023, the contents of which are incorporated herein by reference.

### Background Art

A technology has been studied to apply a CO₂ capture unit to various upstream facilities such as a gas turbine and a GTCC. For example, a blower is provided between the gas turbine and the CO₂ capture unit. An exhaust gas discharged by a facility (gas turbine) on an upstream side is drawn into and supplied to the CO₂ capture unit. PTL 1 discloses a CO₂ capture system including a chimney that discharges an exhaust gas discharged from an industrial facility on an upstream side to an outside, a blower installed on a downstream side of the chimney and drawing in the exhaust gas, and a CO₂ capture unit that captures CO₂ of the exhaust gas drawn in by the blower. The amount of the exhaust gas drawn into the CO₂ capture unit by the blower is increased until a discharge flow rate of the exhaust gas of the chimney becomes zero, and when a discharge amount from the chimney becomes zero, the CO₂ capture unit captures the CO₂ from the exhaust gas while drawing in the exhaust gas by a substantially constant amount.

### Citation List

### Patent Literature

[PTL 1] Japanese Patent No. 5039651

### Summary of Invention

### Technical Problem

In a technology disclosed in PTL 1, a method for controlling an operation of a blower, based on a flow rate of an exhaust gas of a chimney is disclosed. However, an operable range of the blower is not taken into consideration, and a timing for starting and stopping the blower cannot be determined. It is also difficult to detect the flow rate of the exhaust gas, and it is desirable that the flow rate can be determined by using a simpler method.

The present disclosure provides a control device, an exhaust gas supply system, a control method, and a program, which can solve the above-described problems. Solution to Problem

According to the present disclosure, there is provided a control device for a system in which an exhaust gas discharged from a facility is supplied to a CO₂ capture unit by a blower. The control device includes a detection unit that detects an operation state of the facility, a determination unit that determines whether a flow rate of the exhaust gas falls within an operation range of the blower, based on the detected operation state, and a control unit that starts the blower when the flow rate of the exhaust gas is included in the operation range, and that stops the blower when the flow rate of the exhaust gas is lower than the operation range.

According to the present disclosure, there is provided an exhaust gas supply system including an exhaust gas system that guides an exhaust gas discharged from a facility to a CO₂ capture unit, a blower provided on a downstream side of the CO₂ capture unit in the exhaust gas system, a damper provided on a downstream side of the blower in the exhaust gas system, a chimney provided on a downstream side of the damper in the exhaust gas system, and the control device. The control unit opens the damper when the flow rate of the exhaust gas is included in the operation range, and closes the damper when the flow rate of the exhaust gas is lower than the operation range.

According to the present disclosure, there is provided a control method for a system in which an exhaust gas discharged from a facility is supplied to a CO₂ capture unit by a blower. The control method includes a step of detecting an operation state of the facility, a step of determining whether a flow rate of the exhaust gas falls within an operation range of the blower, based on the detected operation state, and a step of operating the blower when the flow rate of the exhaust gas is included in the operation range, and stopping the blower when the flow rate of the exhaust gas is lower than the operation range.

According to the present disclosure, there is provided a program causing a computer to execute a process for controlling a system in which an exhaust gas discharged from a facility is supplied to a CO₂ capture unit by a blower. The process includes a step of detecting an operation state of the facility, a step of determining whether a flow rate of the exhaust gas falls within an operation range of the blower, based on the detected operation state, and a step of operating the blower when the flow rate of the exhaust gas is included in the operation range, and stopping the blower when the flow rate of the exhaust gas is lower than the operation range.

### Advantageous Effects of Invention

According to the control device, the exhaust gas supply system, the control method, and the program, the blower is operated based on an operable condition of the blower. Therefore, a machine or a facility can be safely operated.

### Brief Description of Drawings

Fig. 1 is a schematic view of a CO₂ capture system according to a first embodiment.
Fig. 2 is a flowchart showing an example of control according to the first embodiment.
Fig. 3 is a schematic view of a CO₂ capture system according to a second embodiment.
Fig. 4 is a flowchart showing an example of control according to the second embodiment.
Fig. 5 is a schematic view of a CO₂ capture system according to a third embodiment.
Fig. 6 is a flowchart showing an example of control according to the third embodiment.
Fig. 7 is a view showing an example of a hardware configuration of a control device according to each embodiment.

### Description of Embodiments

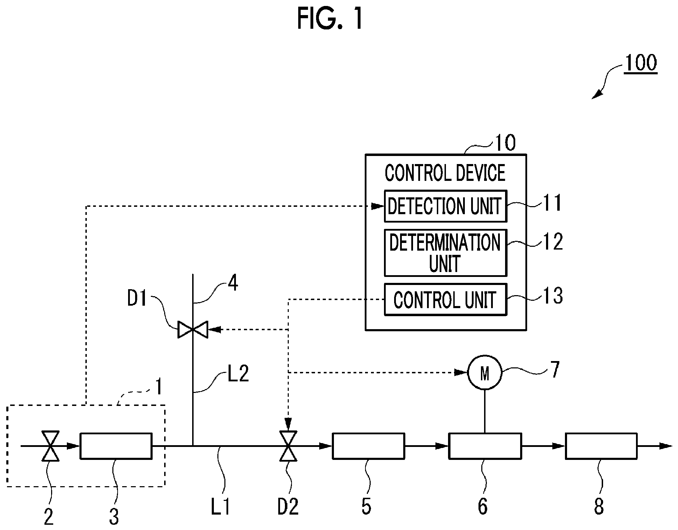

Hereinafter, control of a blower or the like in a CO₂ capture system according to the present disclosure will be described with reference to Figs. 1 to 7.

### <First Embodiment>

### (Configuration)

Fig. 1 is a schematic view of a CO₂ capture system 100 according to a first embodiment. The CO₂ capture system 100 includes an upstream facility 1, a stack (chimney) 4, a cooling tower 5, a blower 6, a CO₂ capture unit 8, and a control device 10. For example, the upstream facility 1 is a power generation plant such as a gas turbine or a gas turbine combined cycle (GTCC). In the present embodiment, a case where the upstream facility 1 is the GTCC 3 will be described as an example. An inlet guide vane (IGV) 2 is provided on an inlet side of the GTCC 3. The air flow rate suctioned into the GTCC 3 is changed by regulating an opening degree of the IGV 2. For example, when a load of the GTCC 3 increases, a suctioned air flow rate increases. In this way, the opening degree of the IGV 2 is controlled in accordance with a required air intake amount. The GTCC 3, the cooling tower 5, the blower 6, and the CO₂ capture unit 8 are disposed on an exhaust gas system L1, and each device is connected by a pipe, a duct, or the like. A branch point connected to a system L2 is present between the GTCC 3 and the cooling tower 5, and the stack 4 is provided in front of the system L2. A damper D1 (also referred to as a stack inlet damper D1) is provided in the system L2. A damper D2 (also referred to as a CO₂ capture unit inlet damper) is provided between a branch point of the system L2 in the system L1 and the cooling tower 5. When the damper D1 is opened and the damper D2 is closed, an exhaust gas discharged by the GTCC 3 is discharged outward of the system from the stack 4. When the damper D1 is closed and the damper D2 is opened, the exhaust gas discharged by the GTCC 3 is supplied to the CO₂ capture unit 8 side. The blower 6 is provided between the cooling tower 5 and the CO₂ capture unit 8, and the blower 6 is started by driving a motor 7. The exhaust gas is drawn in and supplied to the CO₂ capture unit 8 by starting the blower 6. The control device 10 controls opening and closing of the damper D1, opening and closing of the damper D2, starting and stopping of the blower 6 (motor 7), and the like.

The control device 10 includes a detection unit 11, a determination unit 12, and a control unit 13. The detection unit 11 acquires information indicating an operation state or the like of the upstream facility 1. For example, the detection unit 11 acquires an opening degree of the IGV 2, an output of the GTCC, a rotation speed of a gas turbine or a steam turbine forming the GTCC, and the like. The determination unit 12 determines whether the amount of the exhaust gas discharged from the GTCC 3 is included in an operation range of the blower 6, based on the information acquired by the detection unit 11. The control unit 13 controls opening and closing of the dampers D1 and D2, starting and stopping of the blower 6, a rotation speed of the blower 6, and the like, based on a determination result of the determination unit 12.

### (Operation)

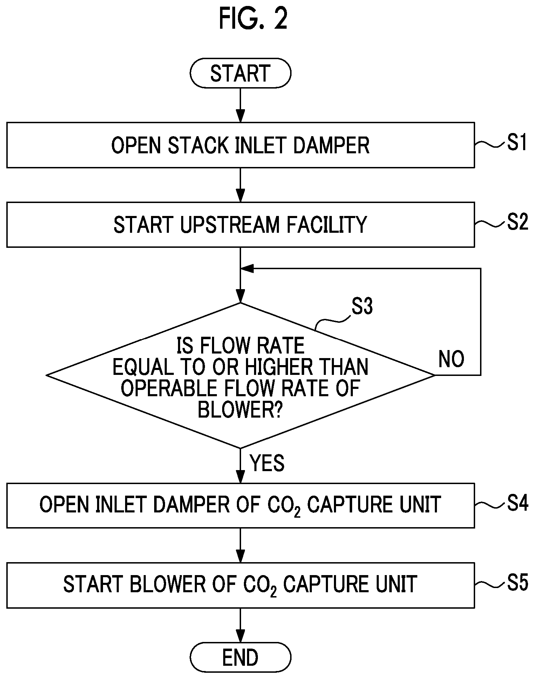

Fig. 2 shows an example of a control method for the CO₂ capture system 100.

First, the control device 10 opens the stack inlet damper D1 (Step S1).

Next, the upstream facility 1 (GTCC 3) is started (Step S2). When the GTCC3 is started, the flow rate of the exhaust gas discharged from the GTCC3 is low until an output increases. When the blower 6 is started in a state where the flow rate of the exhaust gas is low, a gas on a downstream side (downstream side in a flow direction of the exhaust gas, hereinafter the same applies) of the exhaust gas system L1 is pulled. Therefore, for example, a pressure of a machine or a duct on the downstream side becomes a negative pressure, thereby causing a possibility of a failure or deterioration of the machine, the duct, or the like of the exhaust gas system L1, which is assumed to be used at a normal pressure. Therefore, the control device 10 (determination unit 12) determines whether the flow rate of the exhaust gas from the GTCC 3 is equal to or higher than an operable flow rate of the blower 6 (Step S3). For example, when the opening degree of the IGV 2 which is acquired by the detection unit 11 is equal to or greater than a predetermined threshold value, the determination unit 12 considers that an output of the GTCC 3 is large and the amount of the exhaust gas is large. Therefore, the determination unit 12 determines that the flow rate of the exhaust gas discharged from the GTCC 3 is equal to or higher than the operable flow rate of the blower 6. When the opening degree of the IGV 2 is smaller than the predetermined threshold value, the determination unit 12 determines that the flow rate of the exhaust gas is lower than the operable flow rate of the blower 6. Similarly, when a rotation speed or a GTCC load of the gas turbine is equal to or greater than a predetermined threshold value, the determination unit 12 may determine that the flow rate of the exhaust gas is equal to or higher than the operable flow rate of the blower 6, and when the rotation speed or the GTCC load of the gas turbine is smaller than the predetermined threshold value, the determination unit 12 may determine that the flow rate of the exhaust gas is lower than the operable flow rate of the blower 6. When the determination unit 12 determines that the flow rate of the exhaust gas is equal to or higher than the operable flow rate of the blower 6 (Step S3; Yes), the control unit 13 opens the CO₂ capture unit inlet damper D2 (Step S4). Next, the control unit 13 drives the motor 7 to start the blower 6 (Step S5). Next, the control unit 13 closes the stack inlet damper D1.

In Fig. 2, the control when the GTCC 3 is started has been described as an example. However, even during an operation of the GTCC 3 or when the GTCC 3 is stopped, the determination unit 12 may determine whether the flow rate of the exhaust gas discharged from the GTCC 3 is equal to or higher than the operable flow rate of the blower 6, in accordance with an IGV opening degree, a gas turbine rotation speed, a load, and the like acquired by the detection unit 11, and may control starting and stopping of the blower 6 in accordance with a determination result thereof. For example, when the flow rate of the exhaust gas falls below an operable range of the blower 6, the control unit 13 opens the damper D1, stops the blower 6, and closes the damper D2. When the flow rate of the exhaust gas falls within an operable range of the blower 6, the damper D2 is opened, the blower 6 is started, and the damper D1 is closed.

### (Advantageous Effects)

As described above, according to the present embodiment, it is determined whether the flow rate of the exhaust gas is included in the operable range of the blower 6, and the dampers D1 and D2 and the blower 6 are controlled. Since an operable condition (lower limit flow rate of the exhaust gas) of the blower 6 is taken into consideration, a plant can be safely operated by avoiding a failure of a pipe, a duct, a machine, or the like. A magnitude of the flow rate of the exhaust gas is determined, based on the operation state of the upstream facility 1. Therefore, it is not necessary to provide a flow meter, a pressure sensor, or the like. The blower 6 can be automatically started and stopped, based on the operable condition, and an automatic operation can be realized.

### <Second Embodiment>

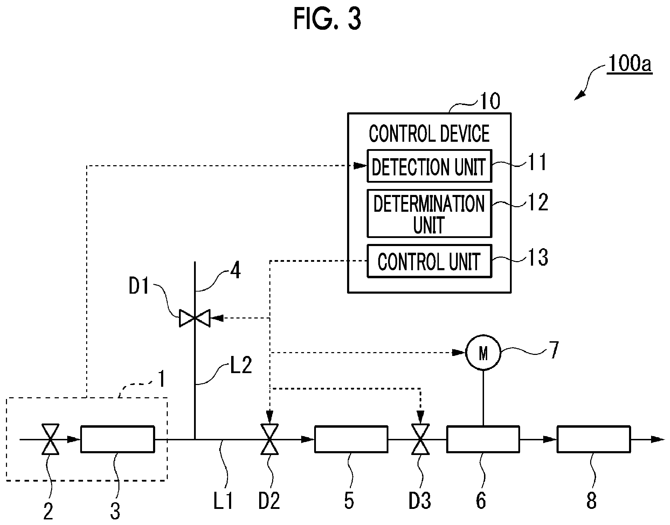

In a second embodiment, in order to widen the operable range of the blower 6 (in order to lower the lower limit flow rate), a flow rate regulating function is provided. Fig. 3 schematically shows a CO₂ capture system 100a according to the second embodiment. In the second embodiment, a flow rate regulating devicedevice D3 is provided on an inlet side of the blower 6, and a rotation speed of the blower 6 and the flow rate regulating device D3 are controlled. For example, the flow rate regulating device D3 is a device that can regulate the flow rate of the exhaust gas flowing to a rear stage by regulating an opening degree of a damper which can regulate the opening degree or a vane in a blower inlet vane such as the IGV 2. When the flow rate of the exhaust gas is throttled by the flow rate regulating device D3, even when the blower 6 is started, a drawing amount is reduced, and even when a sufficient amount of the exhaust gas does not flow, it is possible to suppress influence (case where the exhaust gas system L1 comes to have a negative pressure or the like) on a pressure of the exhaust gas system L1. When the blower 6 is operated by reducing the rotation speed, the drawing amount is reduced. Therefore, it is possible to reduce adverse effects such as a case where the exhaust gas system L1 comes to have the negative pressure. That is, the flow rate regulating device D3 throttles the flow rate and/or operates the blower 6 at a low rotation speed. In this manner, the blower 6 can be started in a state where the flow rate of the exhaust gas is lower than the flow rate in the first embodiment.

A CO₂ capture system 100a according to the second embodiment may be configured as follows. Flow rate regulating device D3 may be provided as shown in Fig. 3, the flow rate of the exhaust gas may be regulated (throttled) by the flow rate regulating device D3, and the blower 6 may be operated at a rated rotation speed, or only rotation speed control of the blower 6 may be performed without providing the flow rate regulating device D3. However, since the flow rate regulating device D3 is provided to perform flow rate control and the rotation speed control of the blower 6 is further performed, an operation condition (lower limit flow rate of the exhaust gas) of the blower 6 can be lowered to the maximum, and the operation range can be widened.

### (Operation)

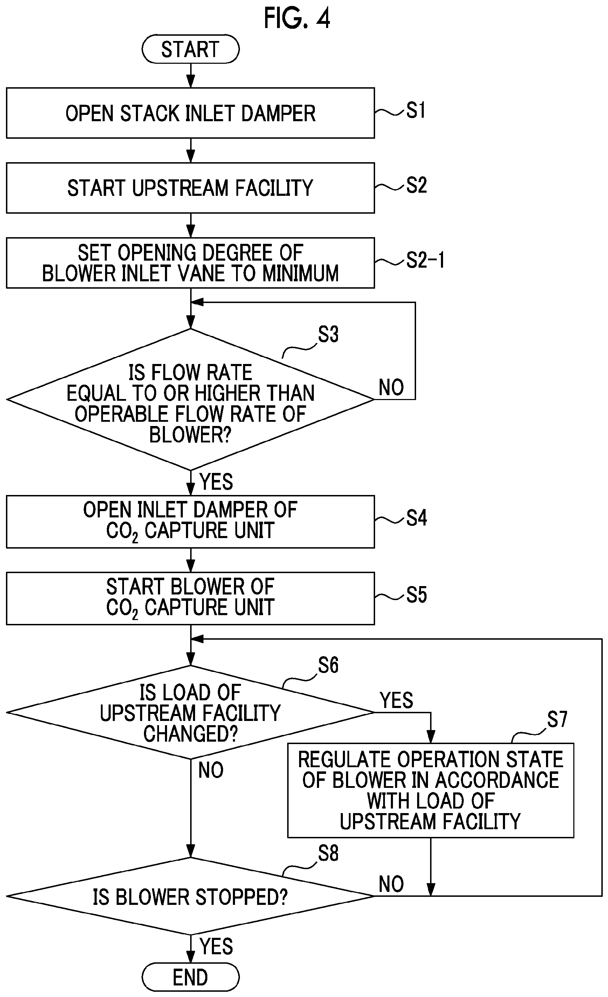

Fig. 4 shows an example of a control method for the CO₂ capture system 100a. The same process as in the first embodiment will be briefly described.

First, the control device 10 opens the stack inlet damper D1 (Step S1). Next, the upstream facility 1 (GTCC 3) is started (Step S2). Next, the control unit 13 sets the opening degree of the blower inlet vane D3 to the minimum (Step S2-1). In this manner, the operable condition (lower limit flow rate of the exhaust gas) of the blower 6 is widened. Next, the determination unit 12 determines whether the flow rate of the exhaust gas is equal to or higher than an operable flow rate of the blower 6 (Step S3). For example, when the opening degree of the IGV 2 which is acquired by the detection unit 11 is equal to or greater than a predetermined threshold value, the determination unit 12 determines that the flow rate of the exhaust gas is equal to or higher than the operable flow rate of the blower 6. When the determination unit 12 determines that the flow rate of the exhaust gas is equal to or higher than the operable flow rate of the CO₂ capture unit (Step S3; Yes), the control unit 13 opens the CO₂ capture unit inlet damper D2 (Step S4). Next, the control unit 13 starts the blower 6 (Step S5). In this case, for example, the control unit 13 may start the blower 6 at a minimum rotation speed. Next, the control unit 13 closes the stack inlet damper D1.

Next, the determination unit 12 determines whether the load of the upstream facility 1 is changed, based on the opening degree of the IGV 2, the rotation speed of the gas turbine, the load, or the like acquired by the detection unit 11 (Step S6). For example, when the opening degree of the IGV 2 or the rotation speed of the gas turbine is changed by a predetermined value or more, the determination unit 12 determines that the load is changed. When it is determined that the load is changed (Step S6; Yes), the control unit 13 regulates the operation state of the blower 6 in accordance with the load of the upstream facility 1 (Step S7). For example, when the load of the upstream facility 1 is lowered, and when the blower 6 is operated at a rated rotation speed, there is a possibility that a pressure of the system becomes a negative pressure. Therefore, the control unit 13 decreases the rotation speed of the blower 6 in accordance with the load of the upstream facility 1. When the load of the upstream facility 1 increases, the control unit 13 increases the rotation speed of the blower 6 in accordance with the load of the upstream facility 1. For example, the control unit 13 may store a table or a function that defines a relationship between the operation state (IGV opening degree, rotation speed of the gas turbine, load, or the like) of the upstream facility 1 and the rotation speed of the blower 6, and may control the rotation speed of the blower 6, based on the table or the function. The control device 10 continues a process subsequent to Step S6. When it is determined that the load is not changed (Step S6; No), the control device 10 determines whether to stop the blower 6 (Step S8). When the control device 10 does not stop the blower 6 (Step S8; No), the control device 10 continues the process subsequent to Step S6. When stopping the blower 6 (Step S8; Yes), the control device 10 stops the blower 6.

### (Advantageous Effects)

As described above, according to the present embodiment, in addition to the advantageous effects of the first embodiment, the operable range of the blower 6 can be widened by regulating the lower limit value of the flow rate of the blower 6. Since the operable condition is lowered, the blower 6 can be started at an earlier stage after the GTCC 3 is started, and the exhaust gas can be fed to the CO₂ capture unit 8. Therefore, an improved CO₂ capture rate can be expected.

### <Third Embodiment>

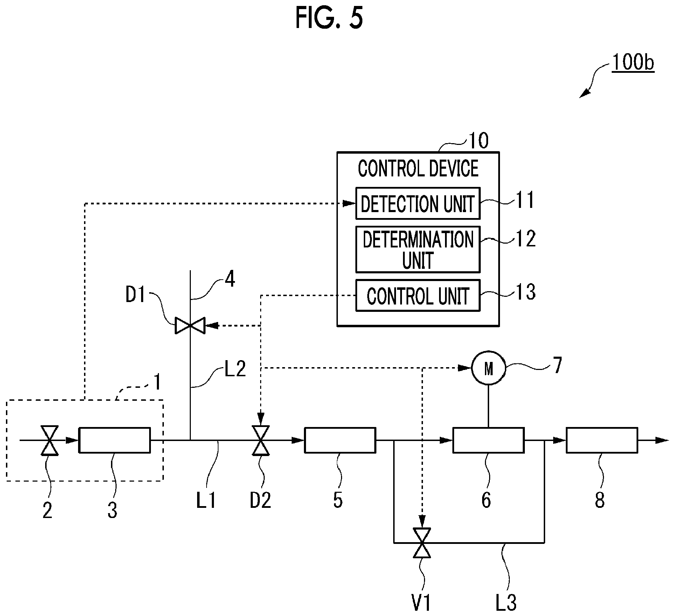

In a third embodiment, a blower circulation system L3 is provided in the blower 6, and when the amount of the exhaust gas supplied from the upstream facility 1 is small, the flow rate is secured by circulating the exhaust gas in the blower circulation system L3. Fig. 5 schematically shows a CO₂ capture system 100b according to the third embodiment. As shown in Fig. 5, a blower circulation system L3 connecting an inlet side and an outlet side of the blower 6 is provided, and a valve V1 is provided in the blower circulation system L3. When the valve V1 is opened, a portion of the exhaust gas drawn in by the blower 6 is returned to the inlet side of the blower 6 through the blower circulation system L3. Even when the amount of the exhaust gas supplied from the upstream facility 1 is small, a portion of the drawn exhaust gas can be covered by the exhaust gas returned through the recycling system L3. Therefore, it is possible to reduce adverse effects on the pressure of the exhaust gas system L1. In this manner, a starting condition (lower limit flow rate) of the blower 6 can be lowered, and the operation range can be widened. For example, even when the upstream facility 1 is stopped, the blower 6 can be operated (brought into a standby state) by opening the valve V1 and circulating the gas through the blower circulation system L3. When the amount of the exhaust gas increases, the damper D2 is opened, and the opening degree of the valve V1 is regulated (for example, fully closed). In this manner, the exhaust gas from the GTCC 3 can be quickly supplied to the CO₂ capture unit 8.

### (Operation)

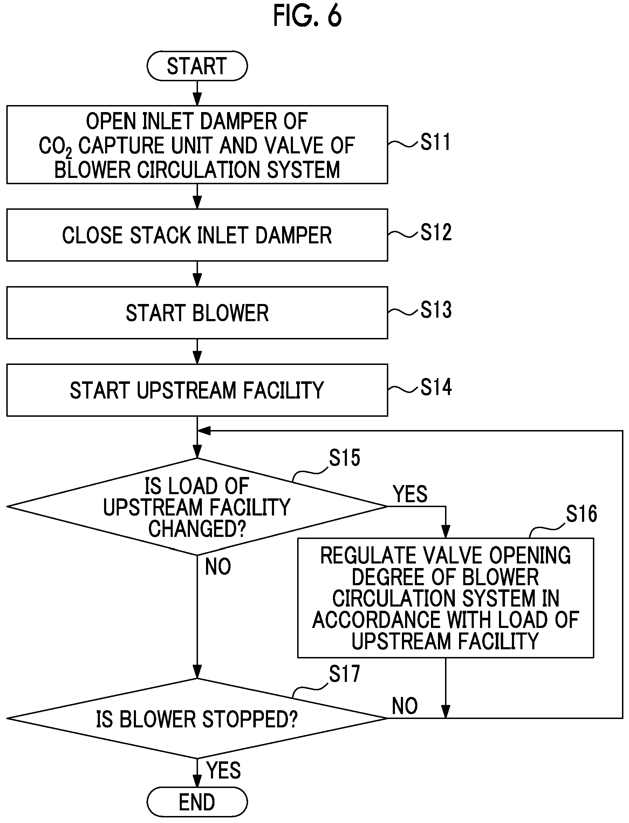

Fig. 6 shows an example of a control method for the CO₂ capture system 100b. The same process as in the first embodiment will be briefly described.

First, the control device 10 opens the CO₂ capture unit inlet damper D2 and the valve V1 of the blower circulation system L3 (Step S11). Next, the control device 10 closes the stack inlet damper D1 (Step S12). Next, the control unit 13 starts the blower 6 (Step S13). Next, the upstream facility 1 (GTCC 3) is started (Step S14). Next, the determination unit 12 determines whether the load of the upstream facility 1 is changed, based on the IGV opening degree, the gas turbine rotation speed, or the like acquired by the detection unit 11 (Step S15). For example, when the opening degree of the IGV 2 or the rotation speed of the gas turbine is changed by a predetermined value or more, the determination unit 12 determines that the load is changed. When it is determined that the load is changed (Step S15; Yes), the control unit 13 regulates the valve opening degree of the valve V1 of the blower circulation system L3 in accordance with the load of the upstream facility 1 (Step S16). For example, when the load of the upstream facility 1 is lowered, and when the blower 6 is operated at a rated rotation speed, there is a possibility that a pressure of the system becomes a negative pressure. Therefore, the control unit 13 increases the valve opening degree of (opens) the valve V1 in accordance with the load of the upstream facility 1, and performs control such that more exhaust gas returns to the inlet side of the blower 6. When the load of the upstream facility 1 increases, the flow rate of the exhaust gas also increases. The control unit 13 decreases the valve opening degree of (closes) the valve V1 such that more exhaust gas can be supplied to the CO₂ capture unit 8. For example, the control unit 13 may store a table or a function that defines a relationship between the operation state (IGV opening degree, rotation speed of the gas turbine, load, or the like) of the upstream facility 1 and the opening degree of the valve V1, and may control the opening degree of the valve V1, based on the table or the function. The control device 10 continues a process subsequent to Step S15. When it is determined that the load is not changed (Step S15; No), the control device 10 determines whether to stop the blower 6 (Step S17). When the control device 10 does not stop the blower 6 (Step S17; No), the control device 10 continues the process subsequent to Step S15. When stopping the blower 6 (Step S17; Yes), the control device 10 stops the blower 6.

### (Advantageous Effects)

As described above, according to the present embodiment, in addition to the advantageous effects of the first embodiment, the operable range of the blower 6 can be widened by regulating the lower limit value of the flow rate of the blower 6. Even when the upstream facility 1 is stopped, the blower 6 can be operated without being stopped, and can be brought into a standby state. The exhaust gas can be quickly supplied to the CO₂ capture unit 8 as the upstream facility 1 is started. The third embodiment can be combined with the second embodiment.

### <Fourth Embodiment>

In a fourth embodiment, in the configuration of the second embodiment, the flow rate regulating device D3 is regulated in advance in accordance with the operation state of the upstream facility 1. For example, in Step S7 of the flowchart in Fig. 4, in addition to the operation state (rotation speed) of the blower 6, the opening degree of the flow rate regulating device D3 is regulated. For example, the control unit 13 opens the opening degree of the flow rate regulating device D3 as the load increases (as the flow rate of the exhaust gas increases), and enables the flow rate regulating device D3 to supply the exhaust gas to the CO₂ capture unit 8 as much as possible. The control unit 13 decreases the opening degree of the flow rate regulating device D3 as the load decreases (as the flow rate of the exhaust gas decreases), and controls the flow rate regulating device D3 to throttle the flow rate. In this manner, the operation range of the blower 6 can be widened. For example, the control unit 13 may store a table or a function that defines a relationship between the operation state (IGV opening degree, rotation speed of the gas turbine, load, or the like) of the upstream facility 1 and the opening degree of the flow rate regulating device D3, and may control the opening degree of the flow rate regulating device D3, based on the table or the function.

### (Advantageous Effects)

According to the fourth embodiment, even when the load of the upstream facility 1 is suddenly changed, the flow rate regulating device D3 is regulated in advance, based on the operation state of the upstream facility 1. In this manner, the amount of the exhaust gas corresponding to the load can be controlled such that the exhaust gas flows in the system L1. Therefore, stable operation can be realized in the whole CO₂ capture system 100a. Since the flow rate regulating device D3 or the rotation speed of the blower 6 is not controlled, based on a measurement value or the like measured by a flow meter or a pressure sensor, the control can be simplified.

As described above, according to the first embodiment to the fourth embodiment, starting and stopping of the blower 6 can be controlled in accordance with the operable range of the blower 6. According to the second embodiment to the fourth embodiment, the operable range of the blower 6 can be widened.

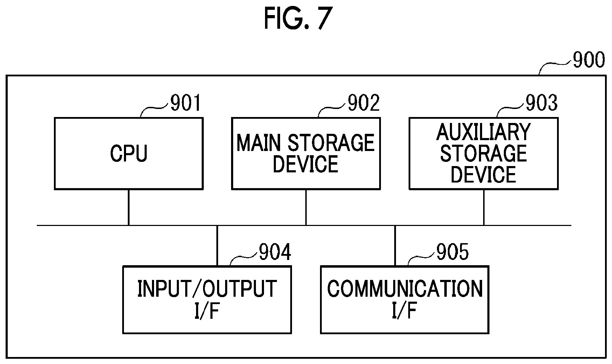

Fig. 7 is a view showing an example of a hardware configuration of the control device according to each of the embodiments. A computer 900 includes a CPU 901, a main storage device 902, an auxiliary storage device 903, an input/output interface 904, and a communication interface 905. The control device 10 described above is installed in the computer 900. Each of the functions described above is stored in the auxiliary storage device 903 in a form of a program. The CPU 901 reads the program from the auxiliary storage device 903, expands the program in the main storage device 902, and executes the above-described processes in accordance with the program. The CPU 901 secures a storage area in the main storage device 902 in accordance with the program. The CPU 901 secures a storage area for storing currently processed data, in the auxiliary storage device 903 in accordance with the program.

A program for achieving all or some of the functions of the control device 10 may be recorded on a computer-readable recording medium, a computer system may read and execute the program recorded on the recording medium, and a process may be performed by each functional unit. The "computer system" herein includes an OS and hardware such as peripheral devices. The "computer system" also includes a homepage providing environment (or display environment) when a WWW system is utilized. The "computer-readable recording medium" refers to a portable medium such as a CD, a DVD, and a USB, or a storage device such as a hard disk incorporated into the computer system. When the program is distributed to the computer 900 by a communication line, the computer 900 to which the program is distributed may expand the program in the main storage device 902, and may execute the above-described processes. The above-described program may be used for realizing some of the above-described functions, or may be used for further realizing the above-described functions in combination with a program previously recorded in the computer system.

While certain embodiments according to the present disclosure have been described, these embodiments have been presented by way of example only, and are not intended to limit the scope of the invention. These embodiments can be implemented in various other forms, and various omissions, substitutions, and modifications can be made within the scope not departing from the concept of the invention. These embodiments and modifications thereof are included in the scope of the invention described in the appended claims and an equivalent scope thereof, as well as in the scope or the concept of the invention.

### <Additional Notes>

The control device, the exhaust gas supply system, the control method, and the program which are described in each of the embodiments are understood as follows, for example.

(1) According to a first aspect, there is provided a control device for a system in which an exhaust gas discharged from a facility is supplied to a CO₂ capture unit by a blower. The control device includes a detection unit that detects an operation state of the facility; a determination unit that determines whether a flow rate of the exhaust gas falls within an operation range of the blower, based on the detected operation state; and a control unit that starts the blower when the flow rate of the exhaust gas is included in the operation range, and that stops the blower when the flow rate of the exhaust gas is lower than the operation range.
   Since the blower is operated based on an operable condition of the blower, the device or the facility can be safely operated.
(2) As the control device according to a second aspect, in the control device of (1), the control unit controls a rotation speed of the blower in accordance with the flow rate of the exhaust gas, based on the operation state.
   When the flow rate of the exhaust gas is low, the operation range of the blower can be widened by lowering the rotation speed of the blower.
(3) According to a third aspect, there is provided a CO₂ capture system including an exhaust gas system that guides an exhaust gas discharged from a facility to a CO₂ capture unit, a blower provided on a downstream side of the CO₂ capture unit in the exhaust gas system, a damper provided on an upstream side of the blower in the exhaust gas system, a chimney provided on an upstream side of the damper in the exhaust gas system, and the control device of (1) to (2). The control unit opens the damper when the flow rate of the exhaust gas is included in the operation range, and closes the damper when the flow rate of the exhaust gas is lower than the operation range.
   In this manner, the blower can be operated in accordance with the flow rate of the exhaust gas. Therefore, the device or the facility can be safely operated.
(4) In the exhaust gas supply system of (3), the control device according to a fourth aspect further includes the flow rate regulating device of the exhaust gas which is provided between the damper and the blower in the exhaust gas system. The control unit regulates an opening degree of the flow rate regulating device in accordance with the flow rate of the exhaust gas, based on the operation state.
   The exhaust gas is supplied to the CO₂ capture unit as much as possible by regulating the opening degree of the flow rate regulating device in accordance with the amount of the exhaust gas, and the system can be stably operated. Since the opening degree of the flow rate regulating device of the exhaust gas is throttled, the operation range of the blower can be widened.
(5) In the exhaust gas supply system of (3) to (4), the control device according to a fifth aspect further includes a circulation system that bypasses the blower on a downstream side of the damper, and a valve provided in the circulation system. The control unit opens the valve when the flow rate of the exhaust gas is lower than the operation range.
   The operation range of the blower can be widened by opening the valve and circulating the exhaust gas through the circulation system.
(6) According to a sixth aspect, there is provided a control method for a system in which an exhaust gas discharged from a facility is supplied to a CO₂ capture unit by a blower. The control method includes a step of detecting an operation state of the facility, a step of determining whether a flow rate of the exhaust gas falls within an operation range of the blower, based on the detected operation state, and a step of operating the blower when the flow rate of the exhaust gas is included in the operation range, and stopping the blower when the flow rate of the exhaust gas is out of the operation range.
(7) According to a seventh aspect, there is provided a program causing a computer to execute a process for controlling a system in which an exhaust gas discharged from a facility is supplied to a CO₂ capture unit by a blower. The process includes a step of detecting an operation state of the facility, a step of determining whether a flow rate of the exhaust gas falls within an operation range of the blower, based on the detected operation state, and a step of operating the blower when the flow rate of the exhaust gas is included in the operation range, and stopping the blower when the flow rate of the exhaust gas is out of the operation range.

### Industrial Applicability

According to the control device, the exhaust gas supply system, the control method, and the program, the blower is operated based on an operable condition of the blower. Therefore, a machine or a facility can be safely operated.

### Reference Signs List

1: upstream facility
2: IGV
3: GTCC
4: stack
5: cooling tower
6: blower
7: motor
8: CO₂ capture unit
10: control device
11: detection unit
12: determination unit
13: control unit
D1, D2: damper
L1, L2, L3: system
100, 100a, 100b: CO₂ capture system
900: computer
901: CPU
902: main storage device
903: auxiliary storage device
904: input/output interface
905: communication interface

## Claims

1. A control device for a system in which an exhaust gas discharged from a facility is supplied to a CO₂ capture unit by a blower, the control device comprising:
a detection unit that detects an operation state of the facility;
a determination unit that determines whether a flow rate of the exhaust gas falls within an operation range of the blower, based on the detected operation state; and
a control unit that starts the blower when the flow rate of the exhaust gas is included in the operation range, and that stops the blower when the flow rate of the exhaust gas is lower than the operation range.

2. The control device according to Claim 1,
wherein the control unit controls a rotation speed of the blower in accordance with the flow rate of the exhaust gas, based on the operation state.

3. An exhaust gas supply system comprising:
an exhaust gas system that guides an exhaust gas discharged from a facility to a CO₂ capture unit;
a blower provided on a downstream side of the CO₂ capture unit in the exhaust gas system;
a damper provided on an upstream side of the blower in the exhaust gas system;
a chimney provided on an upstream side of the damper in the exhaust gas system; and
the control device according to Claim 1 or 2,
wherein the control unit opens the damper when the flow rate of the exhaust gas is included in the operation range, and closes the damper when the flow rate of the exhaust gas is lower than the operation range.

4. The exhaust gas supply system according to Claim 3, further comprising:
a flow rate regulating device of the exhaust gas which is provided between the damper and the blower in the exhaust gas system,
wherein the control unit regulates an opening degree of the flow rate regulating device in accordance with the flow rate of the exhaust gas, based on the operation state.

5. The exhaust gas supply system according to Claim 3, further comprising:
a circulation system that bypasses the blower on a downstream side of the damper; and
a valve provided in the circulation system,
wherein the control unit opens the valve when the flow rate of the exhaust gas is lower than the operation range.

6. A control method for a system in which an exhaust gas discharged from a facility is supplied to a CO₂ capture unit by a blower, the control method comprising:
a step of detecting an operation state of the facility;
a step of determining whether a flow rate of the exhaust gas falls within an operation range of the blower, based on the detected operation state; and
a step of operating the blower when the flow rate of the exhaust gas is included in the operation range, and stopping the blower when the flow rate of the exhaust gas is lower than the operation range.

7. A program causing a computer to execute a process for controlling a system in which an exhaust gas discharged from a facility is supplied to a CO₂ capture unit by a blower, the process comprising:
a step of detecting an operation state of the facility;
a step of determining whether a flow rate of the exhaust gas falls within an operation range of the blower, based on the detected operation state; and
a step of operating the blower when the flow rate of the exhaust gas is included in the operation range, and stopping the blower when the flow rate of the exhaust gas is lower than the operation range.
